Europäisches Patentamt

European Patent Office

Office européen des brevets

(19)

(11) **EP 1 205 737 A2**

(12) **EUROPEAN PATENT APPLICATION**

(43) Date of publication:
**15.05.2002 Bulletin 2002/20**

(51) Int Cl.⁷: **G01F 1/76**

(21) Application number: **01850179.1**

(22) Date of filing: **26.10.2001**

| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Söderholm, Olle**<br>  **161 55 Bromma (SE)**<br>• **Söderholm, Arne**<br>  **167 67 Bromma (SE)** |
| --- | --- |
| (30) Priority: **31.10.2000 SE 0003974** | (74) Representative: **Karlström, Lennart et al**<br>**Noréns Patentbyra AB,**<br>**Box 10198**<br>**100 55 Stockholm (SE)** |
| (71) Applicant: **S.E.G. MEKANIK AB**<br>**S-662 00 Amal (SE)** | |

(54) **Arrangement by apparatuses for measuring mass flow**

(57)      The invention relates to arrangements at apparatus for weighing the mass flow of fluent material, especially of particulate type, by determining forces exerted from the material per unit length in the direction of its movement and its velocity or travel, wherein the measured force (G) corresponds to the weight of the material per unit length; the velocity of the material is measured in a position which corresponds to the mean velocity over the unit length; the velocity sensor (9) is an optical measuring means comprising a light source reflected against an array of photo detecting cells producing a signal representing a speckle pattern of the particulate material; said signal is processed in a calculating means (12) giving an output signal representing the velocity or travel of the material; and the material flow is determined by the calculating means (12) from the output signals from the weight measuring means and the velocity measuring means.

Fig. 1

EP 1 205 737 A2

## Description

This invention relates to an apparatus for weighing a continuous stream of fluent, particulate material.

This can as known be done according to different principles. However to measure the mass flow the mass as well the velocity of the material is to be determined. To measure the mass of a representative part of the flowing is trivial, but to practically combine that with the representative velocity has with some measuring principles been difficult and sometime omitted, where a calibration with a known flow is required. The invention deals with the introduction of one jointly electromechanical component adapted to measure the velocity and applicable to different measuring principles of particulate mass flowing material.

## Background art

Mass flow is defined as m' = dm/dt or q = C * G/L * L/t = C * G * v, where m is the mass unit, t the time unit, q is the weight/time, L a chosen length with the weight G is resting on, v the mean velocity of the weight G and C a constant.

One common type of equipment to measure mass flow is the conveyor belt scale, where the weighing unit is placed under the upper conveying belt having the measuring length L carrying the weight G. The velocity v or travel of the belt is determined by an analogue or digital transducer of known art. However because of belt slip, and length deflections because of changing loads around the entire belt, the accuracy is often limited.

There is a second method of weighing a continuous stream of fluent material, which includes guiding means to direct the material downwards with the form of a shoot onto a weighing means where, in the direction of flow of the material, there is arranged a second plane at an acute angle relative to a vertical plane and the force against the plane is measured. A third method consists of that said second plane is formed with a successive change of the angular direction, whereby an arising centripetal force is measured. A fourth method to determine the mass flow, is to measure the force which arises when the mass flow is forced to abruptly change its direction, where an angled plate is hit by the flow and the impact force on said plate is the measurement of the flow.

However, concerning the three latter methods, the velocity of the flow must be determined by a signal representing the velocity or mean velocity at the place where the force is measured, as the velocity of the material because of the gravitational force is constantly increasing because of the tilted planes.

Most principles of weighing apparatus of this and similar types, except conveying belt scales, of practical reasons leaves out the speed signal and the mass flow is to be determined by calibration with a known material flow where it is assumed that its velocity is constant under normal operation. One example of equipment for producing a velocity signal is disclosed in US patent No. 5,002,140, where a wheel with ribbed surface is placed where the material is leaving the weighing plate and can impinge to cause the wheel to rotate proportionally to the speed of the material. Of reliability reasons this method is limited to suitable materials. Further, as the speed signal measures the output velocity of the material it is not representing the mean value of the velocity of the material sliding over the plate. It is also known from the patent document WO 93/16356 and the European patent application No. 00850036.5 to calculate the mean velocity from the change of the flow profile when the particulate material is accelerating along a tilted weighing plate. At the first reference this is done by supporting the plate by force measuring means at two different levels along the tilted plate. Thereby the weight and the mean velocity are determined. A third force measuring means is also present to determine the friction force of the material against plate surface. The magnitude of the forces exerted relative the capacity of the bulk flow is relatively small, where the number of supporting and pivot points in combination with the small order of forces attacking the measuring means, makes the suggested construction delicate. Especially when small differences between two measured forces are to be measured. At the second reference the plate is supported in one centre point around which the moment is measured as well as the vertical force, which gives higher measuring accuracy. By combining the measured weight and the moment, the mean velocity is achieved, but it still needs extra means to measure the friction force. Another known apparatus is the patent document WO 93/22633 where two of the measuring principles described above are combined; a tilting plane plate is followed of an impact force plate from which output signals the mass flow is calculated, but still not correcting for surface friction errors. The two measured signals from the examples of apparatus shown above are then processed in an electronic device, where also a signal for the total amount of material weighed out is produced. In connection of the third described principle there is a US patent No. 5,970,802 where the material sensing part is attached to one measuring transducer measuring at least two measurable quantities or more transducers which are measuring forces and moments at different places of the material sensing part. From these output signals representing the force and the velocity, the flow is derived, whereby optionally also the flow signal is substantially independent of the friction between the material and the surface of the sensing part after the same principle as described in the examples above.

Other known examples of the third principle of measuring particulate flow mentioned above are US patent No. 5,752,545 and DE patent No. 2947414, and of the fourth principle the US patent No. 4,157,661. None of these include any suggestion to determine the velocity and thus have to be calibrated with a known amount of material. To calibrate a flow meter according to the fourth principle there is a suggestion in US patent No. 5,798,466, where this is made by temporary interrupting the flow and collecting and weighing that amount of material. That is especially important at that measuring principle as the impact force from the material is dependent of its structure (elastic or plastic impact occur).

Velocity measuring units which generally can be applied to sense the velocity of particulate material are only in principle known as optical translating devices (mouse) to manoeuvre the cursor of a computer and one example of such devices is the US patent No. 4,794,384. In this application the unit is applied as a displacement transducer.

Summary of the invention

It is the object of the present invention to provide apparatuses of the kinds referred to, which give a simple and precise function together with a sturdy mechanical construction to measure the travel or velocity of the particulate material handled and measured according to the measuring principles mentioned above.

The optical translating transducer mentioned above comprises a light source angled to an underlying surface and with coherent radiation giving a speckle pattern on the surface. The surface consists in this application of the passing material particles, which constitute the speckle pattern. This light pattern is reflecting back from the surface to a planar array comprising a plurality of photo detector cells, which translate the pattern to an electronic signal, which represents the displacement and its direction.

With a suitable computer programming, said signal will represent the velocity of the particles and further programming will give a mean value of the velocity of the flow. Between the optical parts and the flow a window of hard glass is placed. The unit is placed just at the spot were the velocity ought to be measured.

At the conveyor belt scale that place is the one where the weighing unit is sitting, whereby errors from belt slipping are eliminated, for example against the underside of the conveyor belt or against one of the rollers of the weighing set.

At the method with a sloping plane, where the material is accelerating along the tilting plane, where the mean velocity over the plane can be found by moment measuring simultaneously made as described above, the measuring unit is placed near the middle of the measuring plate.

At the method where the tilting plane is entering a curved part resulting in a centripetal force, the unit is placed just at the part of the plane, where the curve starts.

At the impact plate, placed at an angle to the direction of the flow, the unit is placed just where the stream of material is leaving the material directing channel before it hits the impact plate.

**Brief description of the drawings**

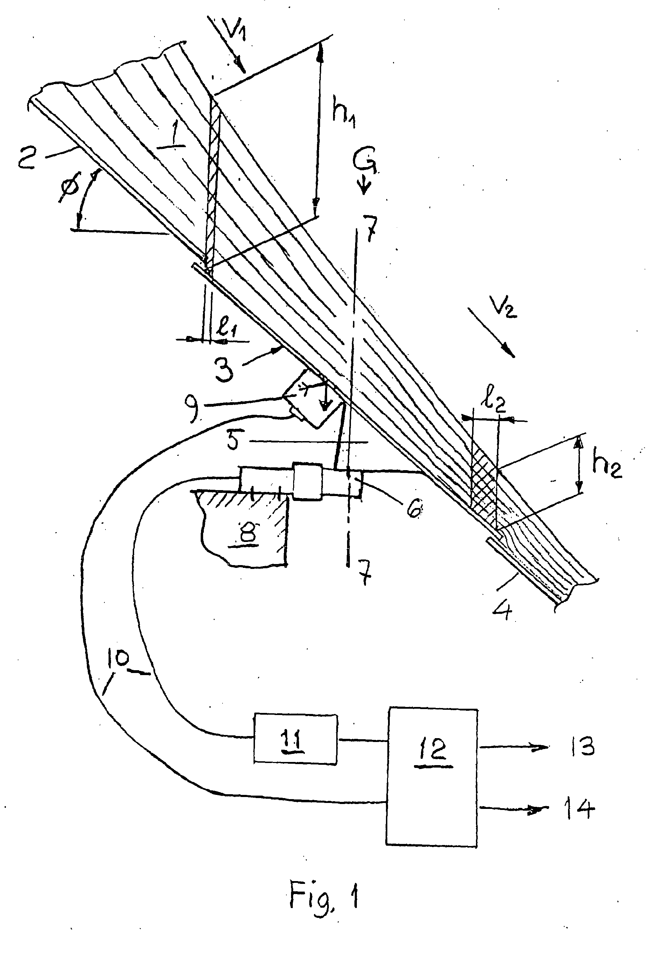

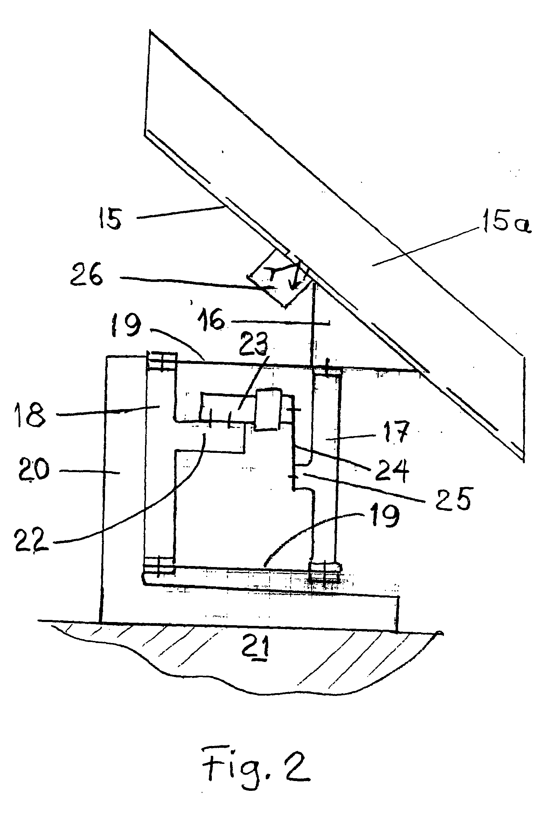

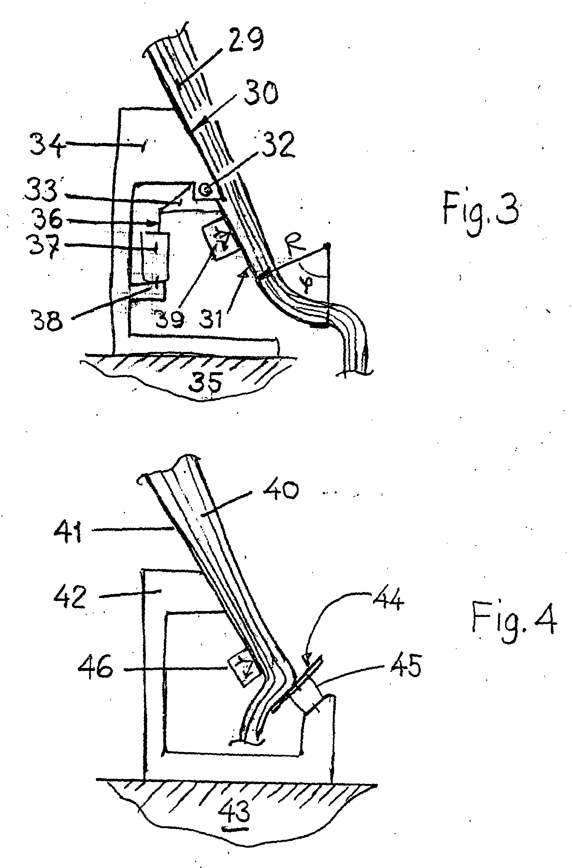

**Fig. 1** is a schematic side elevation view of a flow meter embodying principles of the present invention applied on where material is sliding along an angled plane; **Fig. 2** is a schematic side elevation view of a complete flow meter for embodying principles according to Fig. 1; **Fig. 3** is a schematic side elevation view of a complete flow meter for embodying principles of the present invention applied on where the material is sliding along a tilting plane which tilting direction along the weighing part changes successively towards the horizontal plane; and **Fig. 4** shows a schematic side elevation view of a complete flow meter for embodying principles of the present invention applied on where the material flow is abruptly forced to change the direction because an angled plate is hit and impact forces arise.

**Description of preferred embodiments**

Fig. 1 shows a basic design of the invention where is weighed material is sliding along an angled plane. The material 1 is sliding along the inlet plate 2, in the form of a shoot or tube, from above with an angle $\phi$ and continues over the measuring plate 3 and outlet plate 4. The measuring plate is carried by an attachment means 5, which is attached to one end of a force transducer 6, which is made only to measure a force G in the direction of or parallel to the vertical centre line 7-7. The other end of the transducer 6 is attached to the ground 8. At the centre of the measuring plate 3 the velocity sensor 9, with the reflected light point, is placed and mounted in a way so that it senses the speckledness of the material particles. The force transducer 6 and the velocity sensor 9 are via cables 10 connected to instrumentation. The force transducer is provided with a signal conditional unit 11, from which it is connected to a calculating means 12. The outputs from this are inter alia the flow signal 13 and the weighed out quantity 14.

The inlet velocity of the material to the plate 3 is $v_1$ and the outlet velocity is $v_2$. The height $h_1$ is the height of the sectional area of the incoming material and $h_2$ the height of the outlet area. To illustrate how a continuos flow behave when sliding with constant gravitation along the tilted plate, the mass volume with the length $l_1$ is shown at the inlet point and that will correspond to the volume $V = h_1 \cdot l_1 \cdot b$, where $b$ (not shown on the figure) is the width of the measuring plate. At the outlet point the same volume changes its dimensions to $V = h_2 \cdot l_2 \cdot b$ which area is marked as two equal cross-sectioned areas in the figure. At the distance from the inlet to the outlet of the plate the velocity has changed from $v_1$ to $v_2$. It can be shown that the relative change of the velocity $(v_1 - v_2)/(v_1 + v_2)$ is inversely proportional to the relative change of the height of the material on the weighing plate $(h_1 - h_2)/(h_1 + h_2)$. As the measure-

ment of the force transducer 9 is independent of the centre of gravity of the load, the measurement is the weight (G) which corresponds to the mean value $(h_1 + h_2)/2$, and it can be shown that the material flow (q) is equal to

$$q = C \cdot G \cdot (v_1 + v_2) / 2$$

where C is a constant.

As the mean velocity at the middle of the plate is directly determined in one point, any friction of the material against the surface of the plate, which causes a change of the velocity, will be compensated for as the real velocity is measured. Further, this arrangement gives a precise theoretical determining of the force G, because of that the acceleration is constant along the flat measuring plate and together with the determining of the velocity at middle part of the plate, the advantage to precalculate the measuring range is obtained.

Fig. 2 shows a schematic side elevation view of the flow meter according to Fig. 1. The material is sliding along the inlet plate (not shown on the figure) over the measuring plate 15 provided with side frames 15a and at its centre on both sides with triangular plates 16. The underside of the plates 16 are attached to a vertical load measuring unit located below. This unit consists of a parallel frame with two pillars 17 and 18 on which flat ends a pair of springy strips 19 are firmly attached. The pillar 18 is attached to an L-formed frame 20, which is resting on the ground 21. On pillar 17 a console 22 is mounted, which is carrying the attached load beam 23. This unit is of conventional strain gauge beam type, and senses loads in the cross direction to its longitudinal axis and is via a strip 24 carrying the load on the pillar 17, whereby the strip 24 in its other end is fastened to the head 25. Just at the figure to the left from the centre of the plate 15, on its under side, the velocity measuring unit 26 is placed and its indicating surface via a transparent window (not shown on the figure) admit indication of the sliding particles constituting the material flow.

A variant of this principle is to bring the material to flow in a decided direction by changing the measuring plate 15 to a, mainly horizontal, vibrating shoot, whereby its agitating apparatus is included in part 15. The complete unit is placed on the vertical load measuring unit with the transducer 23 and the velocity measuring unit 26 at the underside of the shoot.

Fig. 3 shows the principle where the material is sliding along a tilting plane whose direction along the weighing part changes successively towards the horizontal plane whereby a centripetal force (changing of impact force) produces a measurement of the weight per length unit. The material 29 is flowing along the input plate 30, in the form of a shoot over the measuring part 31, which is curved with a radius R covering the angle φ. The curved part is producing a centripetal force in the direction of the centre of the angle φ. The upper part of the part 31 is pivoted by the shaft 32 journalled in bearings fastened on both sides to the plate 30. The cantilever 33, attached to the centre of the shaft 32 is arranged to hold part 31 in fixed position and the plate 30 is attached to an L-form frame 34, which is resting on the ground 35. The outer end of the cantilever 33 is via a strip 36 connected to a force measuring device 37, which is fastened to the frame 34 via the head 38. The velocity measuring unit 39 is placed under the upper part of the part 31 and its indicating surface via a transparent window (not shown in the figure) admit indication of the sliding particles constituting the material flow. The velocity of the material 29 just before its retardation produced by the curved part R is an optimum position, but the middle of the curved part R is the perfect position , but the disadvantage of the latter is the manufacturing of a curved window.

Fig. 4 shows a schematic side elevation view of a complete flow meter for embodying principles of the present invention applied on where material flow when the material is forced to change the direction because an angled plate is hit and the impact force and that one is proportional to the material flow as well as the velocity of its particles. The material 40 is flowing along an input plate 41 in the form of a shoot, which is attached to a frame 42 resting on the ground 43.

Below the shoot an angled plate 44 is located, which the material hits and on which it is redirected. The impact force generated is measured by a force measuring device 45. The opposite part of the said device is fastened to the frame 42. At the lower end of the plate 41 the velocity measuring unit 46 is placed at the underside of plate 41 and the indicating surface of the unit 46 via a transparent window (not shown in the figure) admits indication of the sliding particles constituting the material flow just before they hit the impact plate.

Also in these arrangements of flow meters for particulate material are foreseen means for automatic zero setting and locking functions and which are examples of important functions as complements of the calculated means.

**Claims**

1. Arrangements at apparatus for weighing the mass flow of fluent material, especially of particulate type, by determining forces exerted from the material per unit length in the direction of its movement and its velocity or travel, **characterised in**

> **that** the measured force (G) corresponds to the weight of the material per unit length;
> **that** the velocity of the material is measured in a position which corresponds to the mean velocity over the unit length;
> **that** the velocity sensor (9) is an optical measuring means comprising a light source reflected against an array of photo detecting cells producing a signal representing a speckle pattern of the particulate material;

**that** said signal is processed in a calculating means (12) giving an output signal representing the velocity or travel of the material;

**and that** the material flow is determined by the calculating means (12) from the output signals from the weight measuring means and the velocity measuring means.

2. Arrangements at apparatus according to claim 1, **characterised in**

**that** the weighed material is brought to slide along a, to the vertical direction, angled plane with a defined length (3);

**and that** the velocity measuring unit (9) is placed at or near the centre of said plane.

3. Arrangements at apparatus according to claim 1, **characterised in**

**that** the weighed material is brought to pass along a mainly horizontal plane formed as a shoot and brought to vibrate, whereby the material is given a velocity in a decided direction;

**and that** the velocity measuring unit is placed at or near the centre of said plane.

4. Arrangements at apparatus according to claim 1, **characterised in**

**that** the weighed material is brought to slide along a, to the vertical direction, angled plane (30) with the lower part increasing angle (R) whereby the centripetal force around the upper part is measured (37);

**and that** the velocity measuring unit (39) is placed at or near the point where the sloping angle is starting to increase.

5. Arrangements at apparatus according to claim 1, **characterised in**

**that** incoming material is freely governed (41) in an angled direction or vertical direction and directed against a plate (41) placed with one to the incoming angle abruptly deviating angle, were the upcoming impact force on said plate is a measurement of the measured force;

**and that** the velocity measuring unit (46) is placed at the lower end of said plane.

6. Arrangements at apparatus according to claims 1 - 5, **characterised in**

**that** the calculating means (12) includes adapting circuits for the measuring means (11) ;

**and that** a microprocessor for handling the calculations is enclosed.

7. Arrangements at apparatus according to claims 1 - 5, **characterised in**

**that** the calculating means (12) is provided by a function which at flow disturbances locks by time the signal value from the velocity measuring means (9,26, 39,46).

8. Arrangements at apparatus according to claims 1 - 5, **characterised in**

**that** the calculating means is provided with automatic zero setting functions which acts when the flow is absent.

9. Arrangements at apparatus according to claims 1 - 5, **characterised in**

**that** the calculating means is provided with automatic zero setting functions which acts when the flow is absent,

**that** this is decided by continuously sensing said flow level by analysing a flow-dependent signal pattern from the transducers;

**and that** then the transducer signals are kept to zero.

Fig. 1

Fig. 2

Fig.3

Fig.4